# EUROPEAN PATENT APPLICATION

(11) **EP 3 142 344 A1**
(43) Date of publication of application: **15.03.2017**
(21) Application number: 15461558.7
(22) Date of filing: 12.09.2015
(51) Int. Cl.: H04N 1/32

(54) **A SYSTEM AND METHOD FOR STEGANOGRAPHIC CODING OF METADATA ON IMAGES**

(71) Applicant: Uniwersytet Warszawski, 00-927 Warszawa (PL)
(72) Inventor: Werner, Piotr, 05-800 Pruszkow (PL)
(74) Representative: Eupatent.pl

(57) **Abstract**

A method for steganographic coding of metadata on an image, the metadata comprising descriptors and values of descriptors, the method being characterized in that it comprises the steps of: receiving an image; modifying the image by embedding into the image at least one microimage formed of blocks, each block having one of two colors, the at least one microimage comprising: an internal frame (102), comprising a predefined sequence of blocks, such as to allow correct orientation of the microimage to read its contents; and an internal data field (103), comprising a plurality of lines of blocks arranged in a sequence, each line corresponding to a coded descriptor or a value of a descriptor coded in the preceding line in the sequence.

## Description

### TECHNICAL FIELD

The present invention relates to steganographic coding of metadata on images.

### BACKGROUND OF THE INVENTION

Metadata is a term that describes "data about data". For example, metadata, related to a photograph, may include data that describe a date on which the image was created, coordinates of a place the photograph was taken at and other data. Metadata, related to a map, may include data that describe graphical coordinates, map scale and other data.

Images, such as photographs or maps, may have an analog form (e.g. printed on paper) or a digital form (e.g. computer files).

For digital images, there are known several image-related metadata standards, such as Exif (Exchangeable image file format). There are well known procedures for extracting metadata from a digital image and for converting metadata between different standards for digital images.

In turn, there is no standardized, efficient method for storing metadata for analog images. It has been well known, for centuries, to sign images with a name of its creator, for example at a corner of the image. However, although a hand-written signature may be perceived as increasing the value of an analog image, it takes considerable space and therefore frequently disturbs considerable portion of the image.

It is also well known, in the field of analog photography cameras, to add a date stamp at a corner of the image. Such a date stamp also frequently takes considerable portion of the image and disturbs its contents. Although for digital images the amount of metadata is practically unlimited, the metadata, added using standard methods, to analog images take considerable amount of space and addition of large amount of information using standard methods is impractical.

Although digital metadata can be easily accessed when the image is in a digital form, they are usually lost after the image is converted to an analog form, for example printed on paper.

It is known to use digital watermarks on printed images. These watermarks are however prone to disruption when a printed image is replicated, and its quality gets deteriorated.

Therefore, there is a need for providing an alternative method for coding of metadata on images, that will overcome at least some of the above-mentioned problems.

### SUMMARY

There is presented herein a method for steganographic coding of metadata on an image, the metadata comprising descriptors and values of descriptors. The method comprises the steps of: receiving an image; modifying the image by embedding into the image at least one microimage formed of blocks, each block having one of two colors, the at least one microimage comprising: an internal frame, comprising a predefined sequence of blocks, such as to allow correct orientation of the microimage to read its contents; and an internal data field, comprising a plurality of lines of blocks arranged in a sequence, each line corresponding to a coded descriptor or a value of a descriptor coded in the preceding line in the sequence.

Preferably, the number of the blocks in each of the lines of the microimage is equal to the number of lines.

Preferably, the microimage has an external frame, which consists of blocks of the same color.

Preferably, the method further comprises, prior to modifying the image, accessing a metadata dictionary comprising the descriptors and the velues of the descriptors and binary coding the dictionary.

Preferably, the binary coding of the metadata dictionary comprises the steps of: reading the metadata dictionary as a set of pairs, each pair comprising the descriptor and the value of the descriptor; determining a number of pairs as N; determining a binary length of the longest descriptor or value of the descriptor as L; checking whether 2N is significantly different than L and if so, reconstructing the metadata dictionary to match the number of pairs with the size of descriptors or values so that 2N is closer to L than before the reconstruction; selecting a size M of the microimage such that M>=2N+4 AND M>=L+4; filling the internal frame with the unique, predetermined sequence of bits; successively filling the internal data field with the binary representation of the set of pairs.

There is also presented a computer program comprising program code means for performing all the steps of the computer-implemented method as described above when said program is run on a computer, as well as a computer readable medium storing computer-executable instructions performing all the steps of the computer-implemented method as described above when executed on a computer.

There is also presented an encoder for steganographic coding of metadata on an image. The encoder comprises: a data bus communicatively coupled to a memory wherein other components of the system are communicatively coupled to the system bus so that they may be managed by a controller; a Metadata Dictionary Database storing dictionary data related to the image that is stored in the memory; a Binary coder of Dictionary data configured to code the dictionary data according to the method as described above; a Microimage Database configured to store the generated microimage for the selected dictionary and the image that is stored in the memory; an Internal frame definition Database that stores a definition of an internal frame of the microimage; wherein the controller is configured to execute steps of the method as described above.

### BRIEF DESCRIPTION OF THE DRAWINGS

These and other objects of the invention presented herein, are accomplished by providing a system and method for steganographic coding of metadata on images. Further details and features of the present invention, its nature and various advantages will become more apparent from the following detailed description of the preferred embodiments shown in a drawing, in which:
Fig. 1 shows a microimage comprising metadata on an image;
Fig. 2 shows a flow diagram of a method for coding of metadata on an image;
Fig. 3 shows a flow diagram of a method for binary coding of metadata dictionary;
Fig. 4 shows a flow diagram of a method for decoding of coded metadata;
Figs. 5A and 5B show an example of coding metadata on analog maps;
Fig. 6 shows an example of coding metadata related to coordinates on analog maps;
Fig. 7A and 7B show an example of coding metadata on a photograph;
Fig. 8 shows a diagram of the system.

### NOTATION AND NOMENCLATURE

Some portions of the detailed description which follows are presented in terms of data processing procedures, steps or other symbolic representations of operations on data bits that can be performed on computer memory. Therefore, a computer executes such logical steps thus requiring physical manipulations of physical quantities.

Usually these quantities take the form of electrical or magnetic signals capable of being stored, transferred, combined, compared, and otherwise manipulated in a computer system. For reasons of common usage, these signals are referred to as bits, packets, messages, values, elements, symbols, characters, terms, numbers, or the like.

Additionally, all of these and similar terms are to be associated with the appropriate physical quantities and are merely convenient labels applied to these quantities. Terms such as "processing" or "creating" or "transferring" or "executing" or "determining" or "detecting" or "obtaining" or "selecting" or "calculating" or "generating" or the like, refer to the action and processes of a computer system that manipulates and transforms data represented as physical (electronic) quantities within the computer's registers and memories into other data similarly represented as physical quantities within the memories or registers or other such information storage.

A computer-readable (storage) medium, such as referred to herein, typically may be non-transitory and/or comprise a non-transitory device. In this context, a non-transitory storage medium may include a device that may be tangible, meaning that the device has a concrete physical form, although the device may change its physical state. Thus, for example, non-transitory refers to a device remaining tangible despite a change in state.

As utilized herein, the term "example" means serving as a non-limiting example, instance, or illustration. As utilized herein, the terms "for example" and "e.g." introduce a list of one or more non-limiting examples, instances, or illustrations.

### DESCRIPTION OF EMBODIMENTS

According to the method and the system presented herein, metadata on an image is provided in a form of a microimage that is embedded in the image.

The microimage comprises binary data representing a plurality of data pairs, each data pair comprising a descriptor and a value of that descriptor.

The microimage is preferably shaped as a square having a size of M x M square blocks, wherein M>10. The microimage, when embedding in the image, can be scaled, provided its square form is kept. For example, when embedding the microimage in a digital image, each block may be represented by 1 pixel, or a block of 2x2 pixels, or a block of 3x3 pixels, etc.

The blocks of the microimage have binary values, i.e. they can represent a value of 0 (by e.g. a first color such as a white color) or 1 (by e.g. by a second color such as a black color). Preferably, the first and the second color are highly contrasting colors e.g. black and white or dark gray and white or dark blue and white.

A set of blocks belonging to one line of the microimage corresponds to a representation of a descriptor or a value.

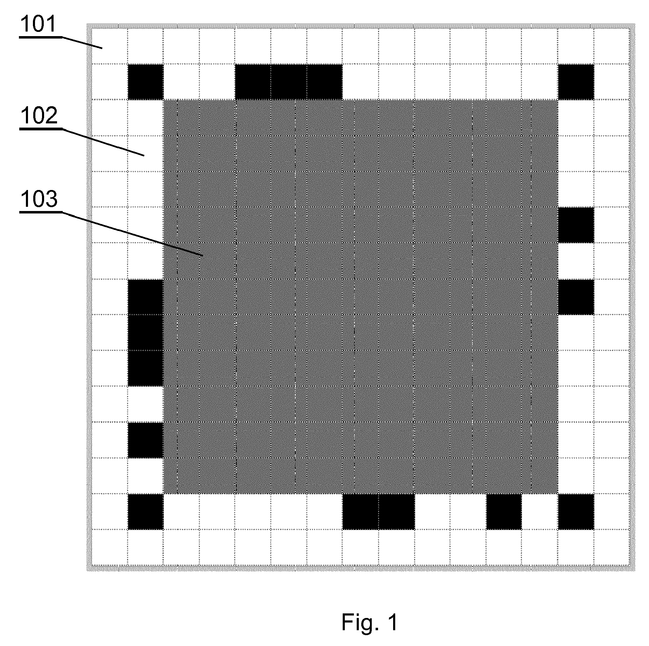

The microimage, as shown for example in Fig. 1, comprises:
- an external frame 101, which preferably consists of blocks of the same color (for example white blocks), and is used to set the outermost border of the microimage to distinguish it from the contents of the image in which the microimage is embedded;
- an internal frame 102, which consists of a predefined sequence of white and black blocks, and is used to determine a correct orientation of the microimage to read its contents;
- and an internal data field 103, comprising lines of white and black blocks, each line corresponding to a coded descriptor or a value of a descriptor of the preceding line. The number of blocks in each line is equal to the number of lines, such that the microimage has a square shape.

In the example of Fig. 1, the external frame 101 has a size of 15x15 pixels, the internal frame 102 has a size of 13x13 pixels and the internal data field 103 has a size of 11x11 pixels (its contents are marked grey as they can be white or black pixels, depending on the coded data).

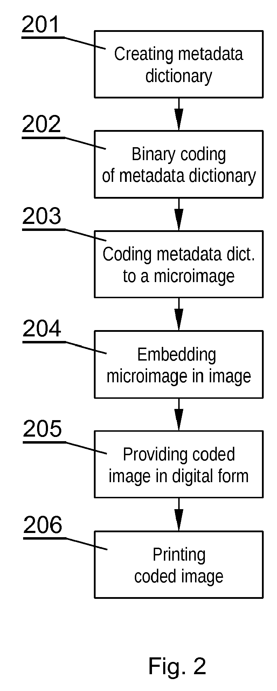

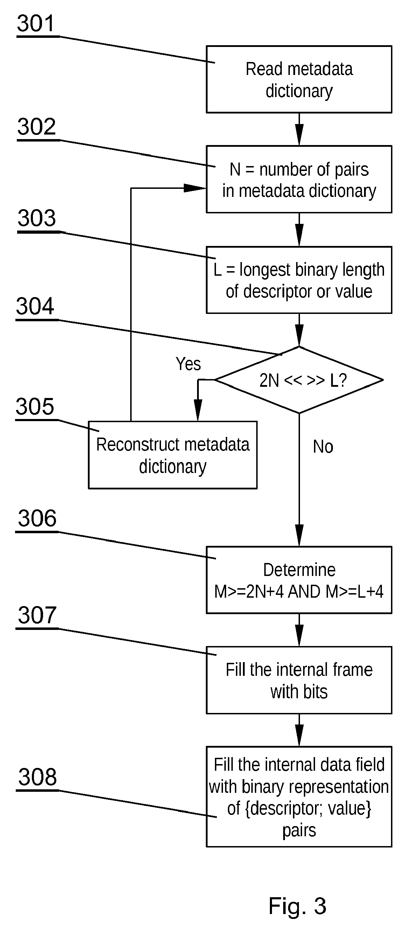

The metadata are coded on the image according to the procedure shown in Fig. 2. First, in step 201, a metadata dictionary is created. The metadata dictionary comprises a set of descriptors and their values that are to describe the image. Next, in step 202, the metadata dictionary is binary coded, as shown in details in Fig. 3 and described below.

The metadata dictionary is read in step 301 as a set of pairs {descriptor; value}. In step 302 the number of pairs is determined as N. In step 303 the binary length of the longest descriptor or value is determined as L. The binary length of the descriptor is determined as the number of bits necessary to store the name of the descriptor. The binary length of the value is determined as the number of bits necessary to store the highest value for the descriptor. Next it is checked in step 304 whether 2N is significantly different than L (for example, whether 2N is more than 50% of L or L is more than 50% of 2N) - if so, then the metadata dictionary is reconstructed in step 305, such as to match the number of pairs with the size of descriptors or values, as will be explained later with exemplary embodiments. 2N should be close to L to provide optimal use of microimage space. In step 306 the size of the microimage is selected such that M>=2N+4 AND M>=L+4, i.e. so that the microimage capacity (being proportional to the size) is able to accommodate the given number of pairs and the internal and external frame. Preferably, M is set as equal to the larger of values (2N+4) OR (L+4).

Next, in step 307, the internal frame 102 is filled with a unique, predetermined sequence of bits. For example, in case of an internal frame having a length of 9 bits, it can be filled as follows:
- *the top row of the internal frame 102 is filled, from the left to the right, with a sequence of the following 7 bits: 1001110 (which may be e.g. an ASCII code of a letter N (for North), which may help to determine the orientation of the microimage);*
- *the right column of the internal frame 102 is filled, from the bottom to the top, with a sequence of the following 7 bits: 1010111 (which may be e.g. an ASCII code of a letter E (for East), which may help to determine the orientation of the microimage when the microimage is rotated 90 degrees clockwise with respect to its intended position);*
- *the bottom row of the internal frame 102 is filled, from the left to the right, with a sequence of the following 7 bits: 1010011 (which may be e.g. an ASCII code of a letter S (for South));*
- *the left column of the internal frame 102 is filled, from the top to the bottom, with a sequence of the following 7 bits: 1000101 (which may be e.g. an ASCII code of a letter W (for West)).*

In case M>11, and therefore when the size of the internal frame is higher than 9, zeroes can be added to the ends of the above-specified sequences.

The sequences mentioned above are a preferred example that allows to appropriately rotate the microimage to its proper orientation.

Next, in step 308, the internal data field 103 is successively filled with binary representation of {descriptor; value} pairs, such that:
- the first line of the internal data field 103 contains binary representation of the descriptor of the first pair;
- the second line contains binary representation of the value of the descriptor of the first pair;
- the third line contains binary representation of the descriptor of the second pair;
- the fourth line contains binary representation of the value of the descriptor of the second pair;
- etc.

It shall be noted that each descriptor and value should be represented by a number of bits equal to M-4, i.e. the least significant bit (LSB) of each descriptor or value shall be contained in the third rightmost column of the microimage.

Referring back to Fig. 2, in step 203, the binary representation is coded to the form of a microimage comprising a set of white and black pixels. Each microimage block may be represented as a single pixel, 2x2 pixels, 3x3 pixels etc., depending on the desired size of the microimage. Next, in step 204 the microimage is embedded (pixels of the image are changed or a new layer is added in case of a multilayered image) into the image to which the metadata corresponds. This is done by overlaying the microimage on a portion of the image - the portion can be predefined (such as top-left corner) or can be selected e.g. by performing image analysis and selecting a portion of image that contains the smallest amount of data (i.e. a blank portion) so as not to deteriorate the contents of the image.

When the image with an embedded microimage is fully in a digital form, a reader of such a steganographic image may read the metadata and interpret them without disclosing the microimage in a form visible to an eye e.g. coordinates, date, time, textual information etc. This is fully up to the reader aplication.

In some embodiments of the present invention, the embedding step, or otherwise modifying, means printing, burning, etching, engraving or similar techniques allowing the microimage to be visibly present on the image, to which the metadata corresponds. In such cases the image is modified after it has been initially printed.

Next, in step 205 a digital form of the coded image (i.e. image with embedded microimage) is provided. That digital image can be printed in step 206 to obtain an analog image with steganographically embedded metadata in a form of a microimage.

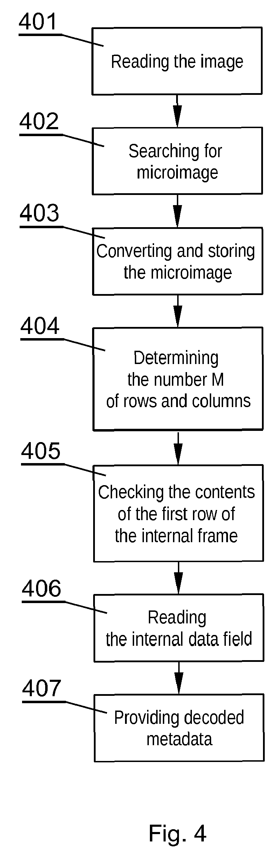

Fig. 4 shows a method for decoding the image. In step 401 the image is read, for example by scanning an analog (printed) image to obtain its digital representation as a set of pixels. Next, a search is performed in step 402 for a fragment of the image that resembles a microimage - if such fragment is found, it is extracted (by discarding all fragment contents outside the external border) and rotated such that the external border is oriented in parallel to the x and y axis.

In step 403 the microimage black-and-white representation is converted to a set of 0s and 1 s and stored in a table in memory. The size of a single block can be determined by determining the size of blocks forming the internal border. Next, in step 404, the number M of rows and columns of the table is determined, which should be equal, i.e. the microimage should have a square shape.

In step 405 the contents of the first row of the internal frame 102 are checked and compared with the predefined sequence for the first row. In case the contents are different, the image is rotated by 90 degrees and the contents are checked again, three times until all sides of the image are checked. If the contents do not correspond to the predefined sequence, the microimage is disregarded as being a portion of the image which is not a metadata microimage or as a disrupted microimage. However, when a sequence corresponding to the predefined sequence is found, then in step 406 the successive contents of the internal data field are read, by decoding successive rows of the internal data field 103 as {descriptor; value} pairs. The decoded metadata is provided in step 407.

The metadata can be then presented to the user on screen or can be stored as digital metadata to accompany the decoded analog image, in one of known digital metadata formats. It can be also provided as an input to another application operated by the computer that decoded the image.

The decoding method may be implemented by any computerized device, preferably a mobile device for use by a user who wants to obtain metadata on a printed, analog map with the microimage embedded therein.

### Example 1 - coding of analog maps

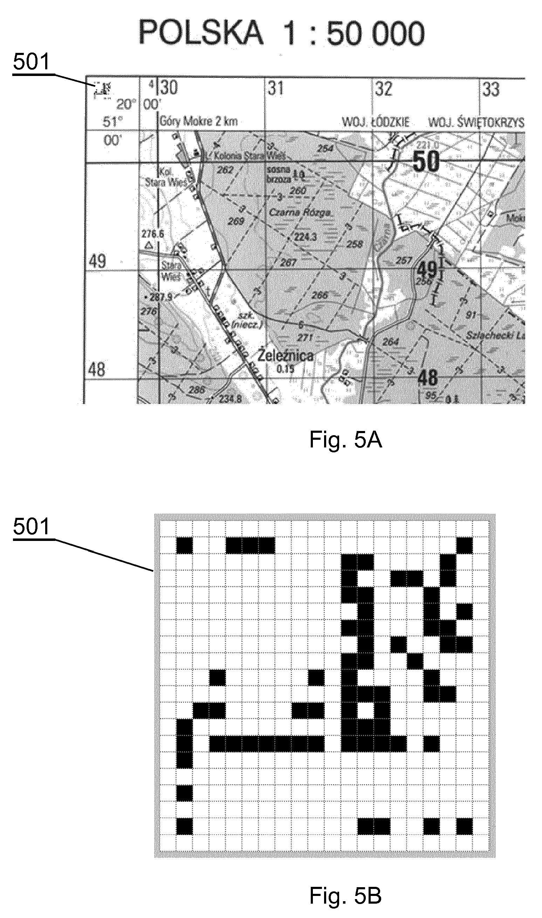

Fig. 5A shows a fragment of a map having a symbol M-34-041-A,B, scale 1:50000 and corresponding to EPSG coordinates (source: http://www.codgik.gov.pl/index.php/zasob/mapy-topograficzne.html)

The initial metadata dictionary provided for coding in step 301 can be as follows:

| Interpretation: | Descriptor | Descr. length (bits) | Descriptor value | Value length (bits) |
|---|---|---|---|---|
| Symbol of map sheet: M-34-041-A,B | Sheet | 40 | M34041AB | 96 |
| Scale 1:50000 | Scale | 40 | 50000 | 16 |
| Coordinate system: EPSG | EPSG | 32 | 32634 | 15 |

It is assumed that the each letter of the descriptor is represented by 8 bits.

For the above example, the number of pairs N = 3, 2N = 6 and the longest length of descriptor or value L = 96. Because 2N is significantly different than L, the metadata dictionary shall be reconstructed (step 305).
The reconstructed dictionary may have the following form:

| Interpretation: | Descriptor | Descr. length (bits) | Descriptor value | Value length (bits) |
|---|---|---|---|---|
| First map symbol: M | A | 8 | M | 8 |
| Second map symbol: 34 | B | 8 | 34 | 8 |
| Third map symbol: (0)41 | C | 8 | 41 | 8 |
| Fourth map symbol: A,B | D | 8 | AB | 16 |
| Scale 1:50000 | S | 8 | 50000 | 16 |
| Coordinate system: EPSG | P | 8 | 32634 | 15 |

For the above example, the number of pairs N = 6, 2N = 12 and the longest length of descriptor or value L = 16. Because 2N is not significantly different than L, the metadata dictionary does not have to be reconstructed and is considered optimal. For the microimage, a size of M = 20 is optimal.

Fig. 5B shows the above-described metadata coded as a microimage. The microimage 501 can be embedded in the top left corner of the image, as shown in Fig. 5A.

### Example 2 - coding of coordinates on analog maps

The coordinates, according to UTM/WGS 84 representation, can be represented for a particular map by the following dictionary:

| Interpretation: | Descriptor | Descr. length (bits) | Descriptor value | Value length (bits) |
|---|---|---|---|---|
| Coordinate system UTM/WGS84 EPSG 32634 | P | 8 | 32634 | 15 |
| Abscissa value X=430000 m | X | 8 | 430 | 9 |
| Ordinate value Y=5649000 | Y | 8 | 5649 | 13 |

For this image, 2N = 6 and L = 15, which for this case can be considered as optimal. In this case, M is set to 20.

A similar dictionary can be provided for another portion of the map, wherein the Y coordinate is changed:

| Interpretation: | Descriptor | Descr. length (bits) | Descriptor value | Value length (bits) |
|---|---|---|---|---|
| Coordinate system UTM/WGS84 EPSG 32634 | P | 8 | 32634 | 15 |
| Abscissa value X=430000 m | X | 8 | 430 | 9 |
| Ordinate value Y=5649000 | Y | 8 | 5650 | 13 |

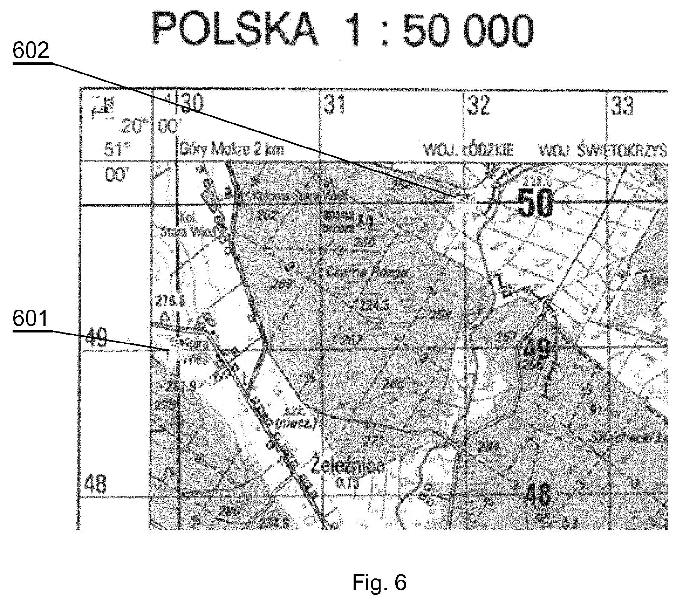

The microimages corresponding to the two above metadata can be provided on a map at the cross-section of the X, Y lines, as respectively microimages 601 and 602 shown in Fig. 6.

According to users or authors preferences, the microimages may be positioned for example on images borders or within its content. In also depends on quality and effectiveness of decoder(s). Nevertheless, in a hidden (from a person reading its content) layer of microimages, the microimages may fill the image, even creating a mesh of microimages. For vector maps there is sufficient a description, placed at the borders, comprising a parallelogram comprising a microimage which comprises metadata such as coordinates, elevation, depth etc.

It should be noted that the microimage can be scaled (by selecting a number of pixels to represent a block of the microimage) and their position on a map can be selected depending on particular design and application. If a map has a digital form of a layered raster image, the microimage can be placed on one of the image layers. If the map has a digital form of a vector image comprising objects, the microimage may be embedded as a vector object. The microimage can be therefore a steganographic element of the map and can be revealed at will using special application.

Advantages of using microimages on maps include:
- use of the microimage (or a set of microimages) to conveniently read the coordinates from analog maps or calculate distances, by using mobile devices,
- a set of microimages (revealed or hidden steganographically) can be used to register the map to a defined coordinate system

### Example 3 - coding of metadata on photographs

The presented microimage can be used for storing the same metadata (or a subset of metadata) that are typically stored for digital images in existing metadata formats, such as EXIF. Other metadata formats are IPTC, Simple Dublin Core and similar. The microimage according to the present invention is designed to comprise mainly numerical data, however there may exist a dictionary comprising textual data. In such a case, this comes at a cost of a size of the microimage, which will increase due to the amount of data carried.

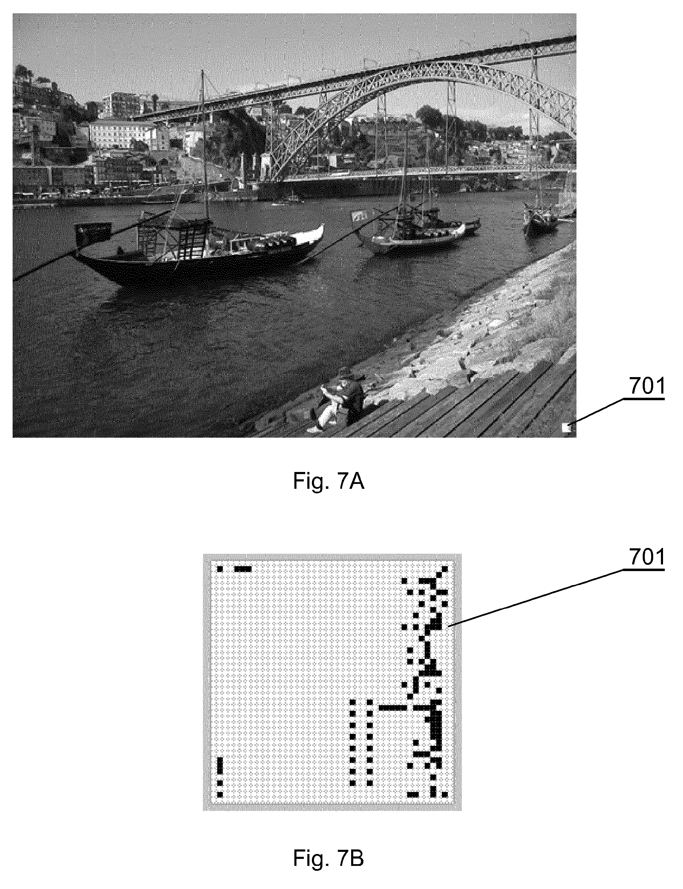

Fig. 7A shows an example of a photograph with embedded microimage 701 describing the following image metadata.

The following metadata should be coded:

| | |
|---|---|
| GPS Latitude | 41° 8'17.84"N (41,13829 decimal degrees) |
| GPS Longitude | 8°36'42.27"W (8,611742 decimal degrees) |
| GPS Altitude | 15 |
| Camera Azimuth | 32 |
| Image Date, time | 2014:07:03 17:28:37 |
| Camera_ExifVersion | 2.2 |

The following metadata dictionary has been created to code the metadata:

| Interpretation: | Descriptor | Descr. length (bits) | Descriptor value | Value length (bits) |
|---|---|---|---|---|
| GPSLatitudeRef | 1 | 8 | N | 8 |
| GPSLatitude degrees | 2 | 8 | 41 | 8 |
| GPSLatitude | 2 | 8 | 8 | 8 |
| GPSLatitude seconds | 2 | 8 | 17 | 8 |
| GPSLatitude 1/100 sec. | 2 | 8 | | Not stored |
| GPSLongitudeRef | 3 | 8 | W | 8 |
| GPSLongitude degrees | 4 | 8 | 8 | 8 |
| GPSLongitude minutes | 4 | 8 | 36 | 8 |
| GPSLongitude seconds | 4 | 8 | 42 | 8 |
| GPSLongitude 1/100 sec. | 4 | 8 | | Not stored |
| GPSAltitudeRef 0 m above sea / 1 m below sea | 5 | 8 | | Not stored |
| GPSAltitude in meters | 6 | 8 | 15 | 8 |
| GPSImgDirectionRef 'T' azimuth 'M' magnetic deviation. | 16 | | T | 8 |
| GPSlmgDirection degrees | 17 | 8 | 32 | 8 |
| DateTimeOriginal year | 36867 | 32 | 2014 | 16 |
| DateTimeOriginal month | 36867 | 32 | 7 | 8 |
| DateTimeOriginal day | 36867 | 32 | 3 | 8 |
| DateTimeOriginal hour | 36867 | 32 | 17 | 8 |
| DateTimeOriginal minute | 36867 | 32 | 28 | 8 |
| DateTimeOriginal second | 36867 | 32 | 37 | 8 |
| ExifVersion 2.2 | 36864 | 32 | 2 | 8 |
| ExifVersion 2.2 | 36864 | 32 | 2 | 8 |

For this image, 2N = 38 and max L = 32, which for this case can be considered as optimal. In this case, M is set to 38 + 4 = 42.

Fig. 7B shows an enlarged version of the microimage.

### Other examples

In a manner equivalent to the above examples, metadata can be coded as microimage on a variety of other images, such as satellite photographs, aerial photographs, LIDAR images, infrared photographs, medical images, etc.

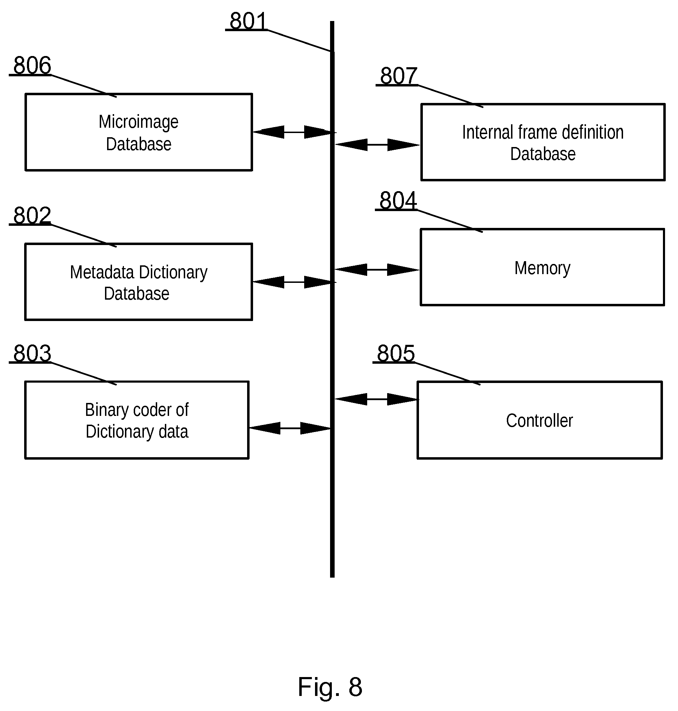

Fig. 8 presents a diagram of the system according to the present invention. The system may be realized using dedicated components or custom made FPGA or ASIC circuits. The system comprises a data bus 801 communicatively coupled to a memory 804. Additionally, other components of the system are communicatively coupled to the system bus 801 so that they may be managed by a controller 805.

The memory 804 may store computer program or programs executed by the controller 805 in order to execute steps of the method according to the present invention.

The system comprises a Metadata Dictionary Database (802) storing dictionary data related to an image that may be stored in the memory (804). Further, a Binary coder of Dictionary data (803) is arranged to code the dictionary data according to the method shown in Fig. 3. The system also comprises a Microimage Database (806) storing a generated microimage for the selected dictionary and the image that is stored in the memory (804). Lastly, the system comprises an Internal frame definition Database (807) that stores a definition of an internal frame of the microimage to be applied on the image.

The present invention embeds additional data in existing images. Therefore, the invention provides a useful, concrete and tangible result. The present invention is also implemented in particular encoder and decoder, thus the machine or transformation test is fulfilled and that the idea is not abstract.

At least parts of the methods according to the invention may be computer implemented. Accordingly, the present invention may take the form of an entirely hardware embodiment (as shown in Fig. 8), an entirely software embodiment (including firmware, resident software, micro-code, etc.) or an embodiment combining software and hardware aspects that may all generally be referred to herein as a "circuit", "module" or "system".

Furthermore, the present invention may take the form of a computer program product embodied in any tangible medium of expression having computer usable program code embodied in the medium.

It can be easily recognized, by one skilled in the art, that the aforementioned method for steganographic coding of metadata on images may be performed and/or controlled by one or more computer programs. Such computer programs are typically executed by utilizing the computing resources in a computing device. Applications are stored on a non-transitory medium. An example of a non-transitory medium is a non-volatile memory, for example a flash memory while an example of a volatile memory is RAM. The computer instructions are executed by a processor. These memories are exemplary recording media for storing computer programs comprising computer-executable instructions performing all the steps of the computer-implemented method according the technical concept presented herein.

While the invention presented herein has been depicted, described, and has been defined with reference to particular preferred embodiments, such references and examples of implementation in the foregoing specification do not imply any limitation on the invention. It will, however, be evident that various modifications and changes may be made thereto without departing from the broader scope of the technical concept. The presented preferred embodiments are exemplary only, and are not exhaustive of the scope of the technical concept presented herein.

Accordingly, the scope of protection is not limited to the preferred embodiments described in the specification, but is only limited by the claims that follow.

## Claims

1. A method for steganographic coding of metadata on an image, the metadata comprising descriptors and values of descriptors, the method being **characterized in that** it comprises the steps of:
- receiving an image;
- modifying the image by embedding into the image at least one microimage formed of blocks, each block having one of two colors, the at least one microimage comprising:
- an internal frame (102), comprising a predefined sequence of blocks, such as to allow correct orientation of the microimage to read its contents; and
- an internal data field (103), comprising a plurality of lines of blocks arranged in a sequence, each line corresponding to a coded descriptor or a value of a descriptor coded in the preceding line in the sequence.

2. The method according to claim 1 **characterized in that** the number of the blocks in each of the lines of the microimage is equal to the number of lines.

3. The method according to claim 1 **characterized in that** the microimage has an external frame (101), which consists of blocks of the same color.

4. The method according to claim 1 **characterized in that** it further comprises, prior to modifying the image, accessing a metadata dictionary comprising the descriptors and the velues of the descriptors and binary coding the dictionary.

5. The method according to claim 4 **characterized in that** the binary coding of the metadata dictionary comprises the steps of:
- reading (301) the metadata dictionary as a set of pairs, each pair comprising the descriptor and the value of the descriptor;
- determining (302) a number of pairs as N;
- determining (303) a binary length of the longest descriptor or value of the descriptor as L;
- checking (304) whether 2N is significantly different than L and if so, reconstructing (305) the metadata dictionary to match the number of pairs with the size of descriptors or values so that 2N is closer to L than before the reconstruction;
- selecting (306) a size M of the microimage such that M>=2N+4 AND M>=L+4;
- filling (307) the internal frame (102) with the unique, predetermined sequence of bits;
- successively filling (308) the internal data field (103) with the binary representation of the set of pairs.

6. A computer program comprising program code means for performing all the steps of the computer-implemented method according to any of claims 1-5 when said program is run on a computer.

7. A computer readable medium storing computer-executable instructions performing all the steps of the computer-implemented method according to any of claims 1-5 when executed on a computer.

8. A encoder for steganographic coding of metadata on an image, the encoder being **characterized in that** it comprises:
- a data bus (801) communicatively coupled to a memory (804) wherein other components of the system are communicatively coupled to the system bus (801) so that they may be managed by a controller (805);
- a Metadata Dictionary Database (802) storing dictionary data related to the image that is stored in the memory (804);
- a Binary coder of Dictionary data (803) configured to code the dictionary data according to the method of claim 5;
- a Microimage Database (806) configured to store the generated microimage for the selected dictionary and the image that is stored in the memory (804);
- an Internal frame definition Database (807) that stores a definition of an internal frame (102) of the microimage;
- wherein the controller (805) is configured to execute steps of the method according to claim 1.
